Europäisches Patentamt

European Patent Office

Office européen des brevets

(19)

(11) EP 0 768 745 B1

(12) FASCICULE DE BREVET EUROPEEN

(45) Date de publication et mention
de la délivrance du brevet:
**15.12.1999 Bulletin 1999/50**

(51) Int Cl.⁶: **H02J 7/10**

(21) Numéro de dépôt: **96402095.2**

(22) Date de dépôt: **01.10.1996**

(54) **Procédé de charge de batteries nickel-cadmium étanches**

Verfahren zum Laden von gasdichten Nickel-Cadmium-Batterien

Charging method for sealed nickel-cadmium batteries

(84) Etats contractants désignés:
**DE ES FR GB IT SE**

(30) Priorité: **05.10.1995 FR 9511715**

(43) Date de publication de la demande:
**16.04.1997 Bulletin 1997/16**

(73) Titulaire: **ALCATEL
75008 Paris (FR)**

(72) Inventeurs:
• **Sanchez, Patrick
  33290 Le Pian Medoc (FR)**
• **Liska, Jean-Louis
  33200 Bordeaux (FR)**

(74) Mandataire: **Laroche, Danièle et al
COMPAGNIE FINANCIERE ALCATEL
Dépt. Propriété Industrielle,
30, avenue Kléber
75116 Paris (FR)**

(56) Documents cités:
**EP-A- 0 626 746          EP-A- 0 629 032
WO-A-90/06615          WO-A-95/09470
GB-A- 2 086 674**

**Description**

La présente invention concerne un procédé pour la charge des accumulateurs nickel-cadmium Ni-Cd étanches, ceux-ci étant généralement montés en batteries. L'invention concerne plus particulièrement un procédé de charge de batteries destinées à être utilisées comme source d'énergie pour des véhicules dans le domaine terrestre ou aéronautique.

Les batteries Ni-Cd actuellement en service nécessitent de fréquentes opérations de maintenance. C'est pourquoi on envisage de les remplacer par des batteries ne nécessitant plus de maintenance. Mais ces batteries doivent être interchangeables avec les batteries traditionnelles, en particulier en ce qui concerne leurs performances en décharge rapide à basse température et la cadence de cyclage à assurer.

Dans le domaine aéronautique, le fonctionnement de ces batteries s'effectue de deux manières différentes. D'une part elles sont utilisées pour le démarrage de turbines, ce qui peut se produire plusieurs fois au cours d'un vol, à de faibles profondeurs de décharge et à des températures comprises entre -40°C et +60°C. D'autre part elles servent de secours, en cas d'incident sur le circuit d'alimentation d'un avion, avec des profondeurs de décharge qui peuvent atteindre 100% à des températures comprises entre -20°C et +60°C.

Dans le domaine terrestre, l'utilisateur doit pouvoir à tout moment disposer d'un véhicule électrique en état de marche.

Il est donc nécessaire que les batteries soient en permanence capables d'assurer leur fonction, et par conséquent qu'elles soient toujours au moins partiellement chargées. C'est la raison pour laquelle les utilisateurs exigent que les batteries soient immédiatement rechargées malgré leur température élevée consécutive à la décharge. Dans d'autres cas, les batteries étant restées inutilisées, elles sont partiellement déchargées et leur température est celle du milieu, parfois très basse. Néanmoins les batteries doivent pouvoir être rechargées de manière rapide et efficace. En outre dans certains cas, le temps autorisé pour la recharge ne dépasse pas 60mn.

La charge complète à régime élevé d'un accumulateur Ni-Cd s'effectue en deux phases. Une première phase de charge correspond à l'oxydoréduction des matières actives des électrodes. Lorsque toute la matière active de l'électrode positive a été transformée, l'accumulateur entre dans une phase de surcharge. Durant cette seconde phase, il se produit un dégagement d'oxygène sur l'électrode positive. La recombinaison de l'oxygène à l'électrode négative conduit à une élévation de la température qui a pour effet secondaire la baisse de la tension de l'accumulateur.

Habituellement, pour s'assurer que l'accumulateur est complètement chargé, on contrôle l'évolution de sa tension ou de sa température, et la charge est interrompue au bout d'un temps fixé, dès que la variation de tension devient négative ou bien encore dès que la température augmente. Dans ces deux cas, la température de l'accumulateur est beaucoup plus élevée en fin de charge qu'elle ne l'était au début. Si la batterie doit être mise en service dans un bref délai, la température n'aura pas le temps de baisser. Lors de la recharge suivante, la température de la batterie, déjà très élevée au début de la charge, s'élèvera encore. Une succession rapide de décharge et de recharge conduira rapidement à la mise hors service de la batterie, car le rendement de la charge sera mauvais et le taux de charge de plus en plus plus faible à chaque recharge.

Dans un accumulateur étanche, la quantité d'électrolyte étant limitée, la présence d'air à l'intérieur de l'accumulateur joue le rôle d'un isolant thermique et gêne l'évacuation des calories. Pour les batteries utilisées dans les véhicules, ces problèmes sont encore aggravés pour deux raisons. La première tient au fait que ces batteries ont une forte capacité, supérieure à 10Ah, l'énergie thermique qu'elles génèrent est donc élevée. La deuxième raison est que la conception de l'accumulateur est défavorable à l'évacuation des calories. Le conteneur des accumulateurs est en matière plastique, pour limiter la masse de la batterie, qui est un mauvais échangeur de chaleur. Afin d'économiser la place disponible, les accumulateurs de forme prismatique sont accolés une fois montés en batterie, ce qui est particulièrement défavorable à l'évacuation des calories.

Le document EP-A-0 626 746 décrit un procédé de charge d'une batterie d'accumulateurs, qui consiste à déterminer la loi d'échauffement de cette batterie d'accumulateurs, de mesurer leur température, et de la comparer à une température de référence calculée en fonction du temps de charge déjà écoulé à partir de la loi d'échauffement. La charge est arrêtée lorsque la différence entre la température des accumulateurs et la température de référence est supérieure à une valeur prédéterminée.

La présente invention a pour but de proposer un procédé de charge qui limite l'échauffement de la batterie, tout en permettant un taux de charge élevé.

L'objet de la présente invention est un procédé de charge d'une batterie d'accumulateurs nickel-cadmium étanches définie par une capacité nominale, ladite batterie possédant une température variable, caractérisé par le fait qu'il comporte au moins les deux étapes suivantes:

- une première étape de charge à courant $I_1$ imposé, exprimé en Ampères, répondant à la condition: $I_{min} \leq I_1 \leq I_{max}$ avec en Ampères $0 \leq I_{min} \leq C_1$ et $0,2C_1 \leq 1_{max} \leq 5C_1$, et de formule:

$$I_1 = \alpha C_1 \, (1 + aT) \text{ avec } 0{,}2 \leq \alpha \leq 5 \text{ et } 0 \leq a \leq 0{,}1$$

où T est ladite température exprimée en degrés celsius, le produit aT étant sans dimension, et où $C_1$ est le courant en Ampères correspondant à la décharge de ladite capacité nominale en une heure, ladite première étape s'interrompant à un critère d'arrêt le premier rempli choisi parmi

. un premier critère qui est une tension $U_1$, exprimée en Volts, répondant à la condition: $U_{min} \leq U_1 \leq U_{max}$ avec $1{,}45V \leq U_{min} \leq 1{,}75V$ et $1{,}50V \leq U_{max} \leq 1{,}80V$ et de formule:

$$U_1 = U_i + bT \text{ avec } -0{,}005 \leq b \leq 0$$

où $U_i$ est une tension définie par $1{,}45V \leq U_i \leq 1{,}75V$,

. et un deuxième critère qui est une vitesse de variation dT/dt de ladite température qui vaut 0,3°C/mn ± 0,2°C/mn, ledit courant $I_1$ et ladite tension $U_1$ étant calculés et réajustés durant ladite première étape suivant l'évolution de la température de ladite batterie,

- une deuxième étape de charge à une tension $U_2$, exprimée en Volts, répondant à la condition: $U_{min} \leq U_2 \leq U_{max}$ avec $1{,}45V \leq U_{min} \leq 1{,}75V$ et $1{,}50V \leq U_{max} \leq 1{,}80V$ et de formule:

$$U_2 = U_i + bT \text{ avec } -0{,}005 \leq b \leq 0$$

et à un courant $I_2$ en Ampères au maximum égal à $0{,}2C_1$, la durée de ladite deuxième étape $t_2$, exprimée en minutes, étant déterminée par la formule:

$$t_2 = \beta t_1 + c \text{ avec } 0{,}2 \leq \beta \leq 5 \text{ et } 5mn \leq c \leq 60mn,$$

où $t_1$ est la durée de ladite première étape, ladite tension $U_2$ étant calculée et réajustée durant ladite deuxième étape suivant l'évolution de la température de ladite batterie.

Les accumulateurs Ni-Cd composant la batterie sont dits étanches, c'est à dire qu'ils comportent une soupape de sécurité qui fonctionne lorsque la pression interne atteint quelques bars. Habituellement, mais non exclusivement, ces accumulateurs sont de forme prismatique et possèdent un conteneur en matière plastique.

Lorsque l'on souhaite débuter la charge de la batterie, celle-ci se trouve à une température qui dépend des évènement antérieurs qu'elle a subit. On définit alors le courant et le critère d'arrêt de la première étape de charge en fonction de cette température. La valeur de ces paramètres est ensuite recalculée périodiquement afin d'être modifiée si la température de la batterie varie. Pendant la majeure partie de la première étape, la température de la batterie varie peu et le courant reste constant. A la fin de cette première étape la température a tendance à augmenter, la valeur des critères d'arrêt est donc recalculée. La première étape est terminée lorsque l'un des critères d'arrêt $U_1$ ou dT/dt est atteint le premier. En général, le critère dT/dt n'est pas utilisé lorsque la température initiale de la batterie est inférieur à environ 0°C car la vitesse de variation de la température reste modérée même en fin de charge.

A l'issue de la première étape, la batterie est déjà en grande partie chargée, la deuxième étape permet de compléter la charge. De même que pour la première étape, la tension $U_2$ sera corrélée à la température instantannée de la batterie. La durée de la deuxième étape dépend à la fois de celle de la première étape et de la température de la batterie. Cet ajustement a pour but d'assurer une charge complète de la batterie tout en minimisant son échauffement. Ainsi quelle que soit l'histoire de la batterie, les paramètres de charge (courant, tension, critères d'arrêt et/ou durée) auront pu être ajustés afin que la batterie puisse fournir ses meilleures performances.

Selon une forme d'exécution préférentielle, le procédé selon l'invention comporte en outre avant ladite première étape une étape de stabilisation de ladite température s'interrompant à un critère d'arrêt qui est une vitesse de variation dT/dt de ladite température qui vaut 0,3°C/mn ± 0,2°C/mn. Cette étape prend toute son importance dès que la température initiale de la batterie est positive. En effet, à la fin de la décharge la température croît, elle continue à augmenter pendant un certain temps suivant l'interruption de la décharge. Les paramètres de charge ne peuvent être valablement déterminés que lorsque la température ne varie plus.

Le procédé de charge selon l'invention a en outre l'avantage de conférer à la batterie des performances améliorées à basses températures.

La présente invention a également pour objet un dispositif de charge par le procédé selon l'invention. Selon une première variante de réalisation, ledit dispositif comporte

- une alimentation en tension et courant,
- des moyens de mémorisation des données constituées par la valeur que doivent prendre les paramètres de charge selon ladite température,
- des moyens de mesure de ladite température et desdits paramètres de charge,
- des moyens de comparaison desdits paramètres de charge mesurés auxdites données,
- des moyens d'imposition de la valeur que doivent prendre lesdits paramètres de charge.

Selon une deuxième variante de réalisation, ledit dispositif comporte

- une alimentation en tension et courant,
- des moyens de mémorisation des données constituées par la loi de variation des paramètres de charge en fonction de ladite température,
- des moyens de calcul de la valeur que doivent prendre lesdits paramètres de charge en fonction de la variation de ladite température,
- des moyens de mesure de ladite température et desdits paramètres de charge,
- des moyens de comparaison desdits paramètres de charge mesurés à la valeur que doivent prendre lesdits paramètres de charge,
- des moyens d'imposition de la valeur que doivent prendre lesdits paramètres de charge.

Avantageusement, lesdits moyens de mesure, lesdits moyens de comparaison et lesdits moyens d'imposition sont susceptibles de mesurer, de comparer puis de réajuster de manière permanente lesdits paramètres de charge, de telle sorte qu'à tout moment les conditions de charge soient le mieux adaptées à la température de la batterie.

L'invention sera mieux comprise et d'autres avantages et particularités apparaîtront à la lecture de la description qui va suivre, donnée bien entendu à titre illustratif.

Dans le dessin annexé:

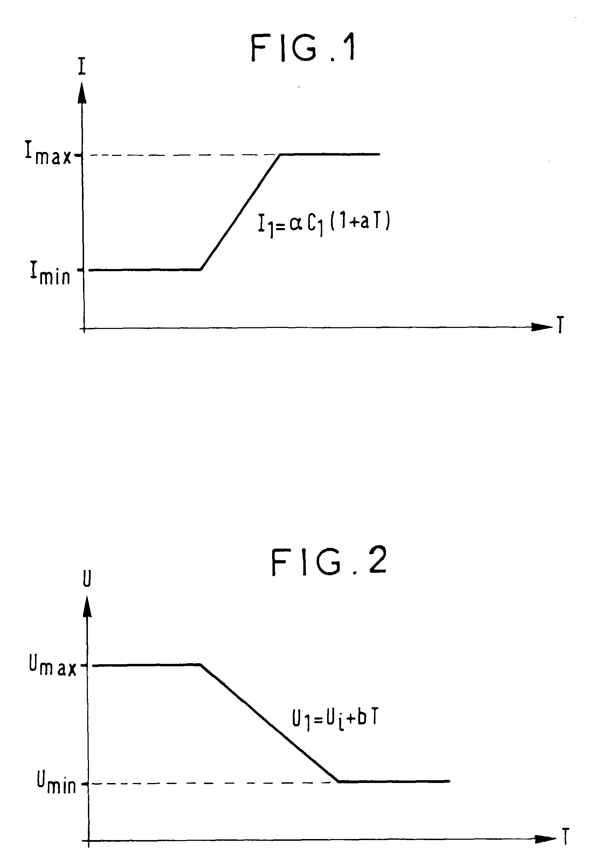

- la figure 1 représente le domaine d'intensité du courant de charge $I_1$ selon l'invention, la température T en degrés celsius est donnée en abscisse et en ordonnée l'intensité I en ampères.
- et la figure 2 représente le domaine de tension $U_1$ selon l'invention, la température T en degrés celsius est donnée en abscisse et en ordonnée la tension U en Volts.

EXEMPLE 1       Art antérieur

On réalise une batterie B1 comportant 20 accumulateurs nickel-cadmium étanches. Chaque accumulateur est prismatique et comporte un conteneur en polyamide muni d'une soupape de sécurité. La batterie a une tension nominale de 24V et une capacité nominale de 45Ah.

La batterie B1 est initialement déchargée de 50% de sa capacité nominale et se trouve à la température de +50°C. Elle est alors chargée, selon un procédé qui ne fait pas partie de la présente invention, de la manière suivante: la charge est effectuée à une tension constante de 30V pendant deux heures, l'intensité de charge étant limitée à une valeur maximale de 45A.

Après 20 à 30 minutes de charge, la température de la batterie s'élève rapidement pour atteindre une valeur de 75°c après 45 minutes. Le courant est demeuré constant et égal à 45A durant toute la charge sans que l'on observe sa diminution comme il est habituel de la constater lorsqu'une batterie d'accumulateurs Ni-Cd ouverte est chargée dans les mêmes conditions.

La charge doit être interrompue afin de ne pas détruire la batterie par emballement thermique.

EXEMPLE 2

Une batterie B2, analogue à celle décrite dans l'exemple 1, est initialement déchargée de 50% de sa capacité nominale et se trouve à la température T de +50°C. Elle est alors chargée selon le procédé de la présente invention de la manière suivante:

- la première étape de la charge est commencée à un courant $I_1$ de 45A; les critères d'arrêt sont les suivants: tension $U_1$ de 28,5V ou bien dT/dt de 0,3°C/mn;
- la deuxième étape de la charge est effectuée à une tension $U_2$ de 28,4V pour un courant maximum $I_2$ autorisé de 9A.

Au cours de la première étape la température T de la batterie passe de +50°C à +53°C. La tension d'arrêt $U_2$ est recalculée et doit être fixée à 28,4V. Le critère dT/dt est atteint le premier au bout de 25 minutes. La première étape est alors terminée, et on entame la deuxième étape. La durée de cette étape est calculée et fixée à 30 minutes. La batterie se trouvant en surcharge, sa température s'élève jusqu'à atteindre 58°C. Lors de la décharge suivante, la batterie restitue sa capacité nominale.

EXEMPLE 3

On réalise une batterie B3 comportant 20 accumulateurs nickel-cadmium étanches. Chaque accumulateur est prismatique et comporte un conteneur en polyamide muni d'une soupape de sécurité. La batterie a une tension nominale de 24V et une capacité nominale de 17Ah.
La batterie est initialement déchargée de 20% de sa capacité nominale et se trouve à une température T de -40°C. Elle est alors chargée selon le procédé de la présente invention de la manière suivante:

- la première étape de la charge est commencée à un courant $I'_1$ de 1,7A; les critères d'arrêt sont les suivants: tension $U'_1$ de 32V ou bien dT/dt de 0,3°C/mn;
- la deuxième étape de la charge est effectuée à une tension $U'_2$ de 32V pour un courant maximum $I'_2$ autorisé de 1,7A.

Au cours de la première étape la température T de la batterie passe de -40°C à -39°C. Le critère de tension d'arrêt $U'_2$ est atteint le premier au bout de 60 minutes. La première étape est alors terminée, et on entame la deuxième étape. La durée de cette étape est calculée et fixée à 90 minutes. A la fin de la charge, la température de la batterie s'élève à -35°C. Après un repos à température ambiante (+20°C) durant 12 heures, on effectue une décharge complète de la batterie qui lui permet de restituer sa capacité nominale.
Bien entendu, les applications numériques fournies ne le sont qu'à titre d'exemple. La présente invention n'est pas limitée aux modes de réalisation décrits dans le cadre des revendications.

**Revendications**

1. Procédé de charge d'une batterie d'accumulateurs nickel-cadmium étanches définie par une capacité nominale, ladite batterie possédant une température variable, caractérisé par le fait qu'il comporte au moins les deux étapes suivantes:

   - une première étape de charge à courant $I_1$ imposé, exprimé en Ampères, répondant à la condition:

   $$I_{min} \leq I_1 \leq I_{max} \text{ avec } 0 \leq I_{min} \leq C_1 \text{ et } 0,2C_1 \leq I_{max} \leq 5C_1$$

   et de formule:

   $$I_1 = \alpha C_1 (1 + aT) \text{ avec } 0,2 \leq \alpha \leq 5 \text{ et } 0 \leq a \leq 0,1$$

   où T est ladite température exprimée en degrés celsius, le produit aT étant sans dimension, et où $C_1$ est le courant correspondant à la décharge de ladite capacité nominale en une heure, ladite première étape s'interrompant à un critère d'arrêt le premier rempli choisi parmi un premier critère qui. est une tension $U_1$, exprimée en Volts, répondant à la condition:

   $$U_{min} \leq U_1 \leq U_{max} \text{ avec } 1,45 \leq U_{min} \leq 1,75 \text{ et } 1,50 \leq U_{max} \leq 1,80$$

   et de formule:

   $$U_1 = U_i + bT \text{ avec } -0,005 \leq b \leq 0$$

   où $U_i$ est une tension définie par

$$1,45 \leq U_i \leq 1,75,$$

et un deuxième critère qui est une vitesse de variation dT/dt de ladite température qui vaut 0,3°C/mn ± 0,2°C/mn, ledit courant $I_1$ et ladite tension $U_1$ étant calculés et réajustés durant ladite première étape suivant l'évolution de la température de ladite batterie,

- une deuxième étape de charge à une tension $U_2$, exprimée en Volts, répondant à la condition:

$$U_{min} \leq U_2 \leq U_{max} \text{ avec } 1,45 \leq U_{min} \leq 1,75 \text{ et } 1,50 \leq U_{max} \leq 1,80$$

et de formule:

$$U_2 = U_i + bT$$

et à un courant $I_2$ au maximum égal à $0,2C_1$, la durée de ladite deuxième étape $t_2$, exprimée en minutes, étant déterminée par la formule:

$$t_2 = \beta t_1 + c \text{ avec } 0,2 \leq \beta \leq 5 \text{ et } 5 \leq c \leq 60,$$

où $t_1$ est la durée de ladite première étape, ladite tension $U_2$ étant calculée et réajustée durant ladite deuxième étape suivant l'évolution de la température de ladite batterie.

2. Procédé selon la revendication 1, comportant en outre, avant ladite première étape, une étape de stabilisation de ladite température s'interrompant à un critère d'arrêt qui est une vitesse de variation dT/dt de ladite température qui vaut 0,3°C/mn ± 0,2°C/mn.

3. Dispositif de charge par le procédé selon l'une des revendications 1 et 2, comportant:

- une alimentation en tension et courant,
- des moyens de mémorisation des données constituées par la valeur que doivent prendre les paramètres de charge selon ladite température,
- des moyens de mesure de ladite température et desdits paramètres de charge,
- des moyens de comparaison desdits paramètres de charge mesurés auxdites données,
- des moyens d'imposition de la valeur que doivent prendre lesdits paramètres de charge.

4. Dispositif de charge par le procédé selon l'une des revendications 1 et 2, comportant:

- une alimentation en tension et courant,
- des moyens de mémorisation des données constituées par une loi de variation des paramètres de charge en fonction de ladite température,
- des moyens de calcul de la valeur que doivent prendre lesdits paramètres de charge en fonction de la variation de ladite température,
- des moyens de mesure de ladite température et desdits paramètres de charge,
- des moyens de comparaison desdits paramètres de charge mesurés à la valeur que doivent prendre lesdits paramètres de charge,
- des moyens d'imposition de la valeur que doivent prendre lesdits paramètres de charge.

5. Dispositif selon l'une des revendications 3 et 4, dans lequel lesdits moyens de mesure, lesdits moyens de comparaison et lesdits moyens d'imposition sont susceptibles de mesurer, de comparer puis de réajuster de manière permanente lesdits paramètres de charge.

**Claims**

1. A method of charging a battery of sealed nickel-cadmium cells defined by a nominal capacity, said battery having a variable temperature, the method being characterized in that it comprises at least the two following steps:

- a first charging step at applied current $I_1$, in amps, which satisfies the condition: $I_{min} \leq I_1 \leq I_{max}$ where, in amps, $0 \leq I_{min} \leq C_1$ and $0.2C_1 \leq I_{max} \leq 5C_1$, and has the formula:

$$I_1 = \alpha C_1 (1 + aT) \text{ where } 0.2 \leq \alpha \leq 5 \text{ and } 0 \leq a \leq 0.1$$

where T is said temperature in degrees Celsius, the product aT being dimensionless, and where $C_1$ is the current in amps corresponding to discharge of said nominal capacity in one hour, said first step being stopped at the first-satisfied stop criterion selected from a first criterion which is a voltage $U_1$, expressed in volts, which satisfies the condition: $U_{min} \leq U_1 \leq U_{max}$ where $1.45V \leq U_{min} \leq 1.75V$ and $1.50V \leq U_{max} \leq 1.80V$ and with formula: $U_1 = U_i + bT$ where $-0.005 \leq \underline{b} \leq 0$, where $U_i$ is a voltage defined by $1.45V \leq U_i \leq 1.75V$, and a second criterion which is the rate of change dT/dt of said temperature which is 0.3°C/min + 0.2°C/min, said current $I_1$ and said voltage $U_1$ being calculated and readjusted during said first step depending on the change in the temperature of said battery,
- a second charging step at a voltage $U_2$, in volts, which satisfies the condition: $U_{min} \leq U_2 \leq U_{max}$ where $1.45V \leq U_{min} \leq 1.75V$ and $1.50V \leq U_{max} \leq 1.80V$ and has the formula: $U_2 = U_i + bT$ where $-0.005 \leq \underline{b} \leq 0$, and at a current $I_2$ in amps which is not greater than $0.2C_1$, the duration of said second period $t_2$, in minutes, being determined by the formula:

$$t_2 = \beta t_1 + c \text{ where } 0.2 \leq \beta \leq 5 \text{ and } 5 \text{ min} \leq \underline{c} \leq 60 \text{ min,}$$

where $t_1$ is the duration of said first step, said voltage $U_2$ being calculated and readjusted during said second step depending on the change in the temperature of said battery.

2. A method according to claim 1, further comprising, before said first step, a step for stabilizing said temperature which finishes at a stop criterion which is the rate of change dT/dt of said temperature which is 0.3°C/min ± 0.2°C/min.

3. Apparatus for charging according to claim 1 or claim 2, comprising:

- a current and voltage supply;
- memory means for memorizing data constituted by the values which the charging parameters must take at said temperature;
- measuring means for measuring said temperature and said charging parameters;
- comparing means for comparing said charging parameters with said data;
- applying means for applying the values which said charging parameters must take.

4. Apparatus for charging according to claim 1 or claim 2, comprising:

- a current and voltage supply;
- memory means for memorizing the data constituted by the law governing the variation of the charging parameters as a function of said temperature;
- calculating means for calculating the values which said charging parameters must take as a function of said temperature;
- measuring means for measuring said temperature and said charging parameters;
- comparing means for comparing said charging parameters with the value which said charge parameters must take;
- applying means for applying the values which said charge parameters must take.

5. Apparatus according to claim 3 or claim 4, in which said measuring means, said comparing means and said applying means are capable of measuring, comparing and permanently readjusting said charging parameters.

**Patentansprüche**

1. Verfahren zur Ladung einer gasdichten Nickel-Cadmium-Akkumulatorenbatterie, die durch eine Nennkapazität definiert ist, wobei die genannte Batterie einer veränderbare Temperatur aufweist,
   **dadurch gekennzeichnet,** daß es wenigstens die beiden folgenden Schritte aufweist:

   - einen ersten Schritt zur Ladung mit dem auferlegten Strom $I_1$ der, ausgedrückt in Ampère, der Bedingung genügt:

$$I_{min} \leq I_1 \leq I_{max}, \text{ mit } 0 \leq I_{min} \leq C_1 \text{ und } 0,2 \, C_1 \leq I_{max} \leq 5 \, C_1$$

und der Formel:

$$I_1 = \alpha C_1 \, (1 + aT) \text{ mit } 0,2 \leq \alpha \leq 5 \text{ und } 0 \leq a \leq 0,1$$

worin T die genannte Temperatur, ausgedrückt in Grad Celsius, ist, das Produkt aT keine Dimension hat, und worin $C_1$ der Strom ist, der der Entladung der genannten Nennkapazität in einer Stunde entspricht, wobei der genannte erste Schritt bei einem zuerst erfüllten Unterbrechungskriterium unterbrochen wird, das gewählt ist aus einem ersten Kriterium, das eine Spannung $U_1$ ist die, ausgedruckt in Volt, der Bedingung genügt:

$$U_{min} \leq U_1 \leq U_{max} \text{ mit } 1,45 \leq U_{min} \leq 1,75 \text{ und } 1,50 \leq U_{max} \leq 1,80$$

und der Formel:

$$U_1 = U_i + bT \text{ mit } -0,005 \leq b \leq 0,$$

worin $U_i$ eine durch $1,45 \leq U_i \leq 1,75$ definierte Spannung ist,
und einem zweiten Kriterium, das eine Ändeningsgeschwindigkeit dT/dt der genannten Temperatur ist, die 0,3 °C/min ± 0,2 °C/min beträgt, wobei der genannte Strom $I_1$ und die genannte Spannung $U_1$ während des genannten ersten Schrittes gemäß dem Verlauf der Temperatur der genannten Batterie berechnet nachgestellt werden,
   - einen zeiten Schritt zur Ladung mit einer Spannung $U_2$ die, ausgedrückt in Volt, der Bedingung genügt:

$$U_{min} \leq U_2 \leq U_{max} \text{ mit } 1,45 \leq U_{min} \leq 1,75 \text{ und } 1,50 \leq U_{max} \leq 1,80$$

und der Formel:

$$U_2 = U_i + bT$$

und mit einem Strom $I_2$, der im Maximum gleich $0,2 \, C_1$ ist, wobei die Dauer des genannten zweiten Schrittes $t_2$, ausgedrückt in Minuten, durch die Formel bestimmt wird:

$$t_2 = \beta t_1 + c \text{ mit } 0,2 \leq \beta \leq 5 \text{ und } 5 \leq c \leq 60,$$

worin $t_1$ die Dauer des genannten ersten Schrittes ist, und die genannte Spannung $U_2$ während des genannten zweiten Schrittes gemäß dem Verlauf der Temperatur der genannten Batterie berechnet und nachgestellt wird.

2. Verfahren nach Anspruch 1, welches vor dem genannten ersten Schritt außerdem einen Schritt zur Stabilisierung der genannten Temperatur aufweist, der bei einem Unterbrechungskriterium, das eine Änderungsgeschwindigkeit dT/dt der genannten Temperatur ist, die 0,3 °C/min ± 0,2 °C/min beträgt, unterbrochen wird.

3. Vorrichtung zum Laden mit dem Verfahren gemäß einem der Ansprüche 1 und 2, welche umfaßt:

- eine Spannungs- und Stromversorgung,
- Mittel zum Speichern von Daten, die durch die Werte gebildet werden, welche die Ladeparameter entsprechend der genannten Temperatur annehmen sollen
- Mittel zur Messung der genannten Temperatur und der genannten Ladeparameter,
- Mittel zum Vergleichen der genannten gemessenen Ladeparameter mit den genannten Daten,
- Mittel zum Auferlegen des Wertes, den die genannten Ladeparameter annehmen sollen.

4. Vorrichtung zum Laden mit dem Verfahren gemäß einem der Ansprüche 1 und 2, welche umfaßt:

- eine Spannungs- und Stromversorgung,
- Mittel zum Speichern der Daten, die durch die gesetzmäßige Änderung der Ladeparameter als Funktion der genannten Temperatur gebildet werden,
- Mittel zur Berechnung des Wertes, den die genannten Ladeparameter als Funktion der Änderung der genannten Temperatur annehmen sollen,
- Mittel zur Messung der genannten Temperatur und der genannten Ladeparameter,
- Mittel zum Vergleichen der genannten gemessenen Ladeparameter mit dem Wert, den die genannten Ladeparameter annehmen sollen,
- Mittel zum Auferlegen des Wertes, den die genannten Ladeparameter annehmen sollen.

5. Vorrichtung nach einem der Ansprüche 3 und 4, bei welcher die genannten Mittel zum Messen, die genannten Mittel zum Vergleichen und die genannten Mittel zum Auferlegen dazu geeignet, zu messen, zu vergleichen, und dann die genannten Ladeparameter ständig nachzuregeln.

# FIG.1

$I_1 = \alpha C_1 (1+aT)$

# FIG.2

$U_1 = U_i + bT$